# EUROPEAN PATENT SPECIFICATION

(11) **EP 3 309 442 B1**
(45) Date of publication and mention of the grant of the patent: **13.05.2020**
(21) Application number: 16807730.3
(22) Date of filing: 31.05.2016
(51) Int. Cl.: F17C 5/02, F02M 25/08, F02M 21/02, B63B 25/16, F17C 7/04

(54) **FUEL GAS SUPPLY SYSTEM**
BRENNGASVERSORGUNGSSYSTEM
SYSTÈME D'ALIMENTATION EN COMBUSTIBLE GAZEUX

(30) Priority: 10.06.2015 KR 20150081738
(43) Date of publication of application: 18.04.2018
(73) Proprietor: Samsung Heavy Ind. Co., Ltd., Seoul 06620 (KR)
(72) Inventor: LEE, Weon Doo, Geoje-si, Gyeongsangnam-do 53261 (KR); KANG, Ho Suk, Geoje-si, Gyeongsangnam-do 53261 (KR); PARK, Su Youl, Geoje-si, Gyeongsangnam-do 53261 (KR); LEE, Jong Chul, Geoje-si, Gyeongsangnam-do 53261 (KR); LEE, Hyo Eun, Geoje-si, Gyeongsangnam-do 53261 (KR); HAN, Jun Hee, Geoje-si, Gyeongsangnam-do 53261 (KR); HWANG, Ye Rim, Geoje-si, Gyeongsangnam-do 53261 (KR); YOON, Ho Byung, Geoje-si, Gyeongsangnam-do 53261 (KR)
(74) Representative: Pfenning, Meinig & Partner mbB
(86) International application number: PCT/KR2016/005747
(87) International publication number: WO 2016/200089

(56) References cited:
- JP-A- S62 224 799
- JP-A- S62 224 799
- KR-A- 20120 107 832
- KR-A- 20130 080 209
- KR-A- 20140 052 898
- KR-A- 20150 062 841
- US-A1- 2014 053 600
- US-A1- 2014 290 279

## Description

### [Technical Field]

The present invention relates to a fuel gas supply system.

### [Background Art]

As IMO regulations on the emission of greenhouse gases and various air pollutants are strengthened, in shipbuilding and shipping industries, instead of using conventional fuels such as heavy oil and diesel oil, natural gas, which is a clean energy source, is often used as fuel gas for ships.

Natural gas is typically is managed and operated by phase change to liquefied natural gas which is a colorless transparent cryogenic liquid with its volume reduced to 1/600 by cooling the natural gas at about -162 °C, for ease of storage and transportation.

Such liquefied natural gas is contained in a storage tank installed in an insulated manner on a hull for storage and transportation. However, since it is practically impossible to store the liquefied natural gas in a completely insulated state, the external heat is continually transmitted to the inside of the storage tank, so that boil-off gas generated by natural vaporization of the liquefied natural gas is accumulated in the storage tank. Since such boil-off gas may increase the internal pressure of the storage tank to cause deformation and damage of the storage tank, it is necessary to treat and remove the boil-off gas.

Conventionally, a method of flowing boil-off gas to a vent mast provided on an upper portion of a storage tank or a method of burning boil-off gas by using a GCU (Gas Combustion Unit) has been used. However, since these methods are undesirable from the viewpoint of energy efficiency, there has been used a method of utilizing boil-off gas by supplying the boil-off gas to an engine of a ship as fuel gas together with the liquefied natural gas, or respectively, or a method of utilizing boil-off gas by re-liquefying boil-off gas using a re-liquefying apparatus comprising a refrigeration cycle or the like.

Natural gas is a mixture containing ethane, propane, butane, nitrogen and the like in addition to methane. Among them, the boiling point of nitrogen is about - 195.8 degrees Celsius, which is much lower than that of methane (boiling point: - 161.5 degrees Celsius) and ethane (boiling point: -89 degrees Celsius) and the like.

Accordingly, boil-off gas generated by spontaneously vaporizing in a storage tank contains a large amount of nitrogen component having a relatively low boiling point, which causes deterioration of the re-liquefaction efficiency of boil-off gas, thereby affecting the utilization and treatment of boil-off gas.

In addition, the nitrogen component of boil-off gas affects the decrease in a heating value of fuel gas when the boil-off gas is supplied to an engine of a ship as fuel gas, and thus there is a need for a method capable of improving the re-liquefaction efficiency of boil-off gas and a heating value of fuel gas, while efficiently utilizing and managing the fuel gas.

### [Disclosure of Invention]

### [Technical Problem]

Therefore, it is an object of the present invention to provide a fuel gas supply system capable of improving the re-liquefaction efficiency of boil-off gas.

It is an object of the present invention to provide a fuel gas supply system capable of efficiently utilizing and managing boil-off gas.

It is an object of the present invention to provide a fuel gas supply system capable of effectively regulating and maintaining a heating value of fuel gas supplied to an engine.

It is an object of the present invention to provide a fuel gas supply system capable of efficiently operating equipment with a simple structure.

It is an object of the present invention to provide a fuel gas supply system capable of improving energy efficiency.

### [Technical Solution]

In accordance with the invention, there is provided a fuel gas supply system including a storage tank for receiving liquefied gas and boil-off gas, a first fuel gas supply line provided with a compression unit pressurizing boil-off gas of the storage tank and supplying boil-off gas pressurized through the compression unit to a first engine, a second fuel gas supply line branched from an intermediate portion of the compression unit and supplying boil-off gas partially pressurized by the compression unit to a second engine, a re-liquefaction line for receiving and re-liquefying a part of the pressurized boil-off gas, and a heating value regulator for measuring and regulating a heating value of fuel gas supplied to the second engine, wherein the re-liquefaction line includes a cooling unit for cooling the pressurized boil-off gas, a first expansion valve for primarily depressurizing the pressurized boil-off gas that has passed through the cooling unit, a first gas-liquid separator for separating boil-off gas which has passed through the first expansion valve and is in a gas-liquid mixed state into gas components and liquid components, a boil-off gas circulation line for supplying the gas components separated in the first gas-liquid separator to the second engine, and a liquefied gas circulation line for receiving the liquid components separated in the first gas-liquid separator.

The heating value regulator includes a heating value measuring device for measuring a heating value of the fuel gas supplied to the second engine, and a first flow rate regulation valve provided at the second fuel gas supply line and a second flow rate regulation valve provided at the boil-off gas circulation line.

The heating value regulator may further include a heating value regulation line for circulating the gas components of the first gas-liquid separator flowing along the boil-off gas circulation line to the liquefied gas circulation line, and a third flow rate regulation valve provided at the heating value regulation line.

The respective flow rate regulation valves may be provided so that the operation thereof is controlled based on fuel gas heating value information measured by the heating value measuring device.

The re-liquefaction line may further include a second expansion valve provided at the liquefied gas circulation line for secondly depressurizing the liquid components separated in the first gas-liquid separator, a second gas-liquid separator for separating boil-off gas that has passed through the second expansion valve and is in a gas-liquid mixed state into gas components and liquid components, a boil-off gas recovery line for supplying the gas components separated in the second gas-liquid separator to the storage tank or an front end of the compression unit on the first fuel gas supply line, and a liquefied gas recovery line for supplying the liquid components separated in the second gas-liquid separator to the storage tank.

The cooling unit may include heat exchangers for heat-exchanging the pressurized boil-off gas with at least one of the boil-off gas in the front end of the compression unit and the gas components separated in the first gas-liquid separator.

The first expansion valve may be provided to depressurize the pressurized boil-off gas to a pressure level corresponding to a fuel gas pressure condition required by the second engine or a pressure of the partially pressurized boil-off gas.

### [Advantageous Effects]

A fuel gas supply system according to an embodiment of the present invention has the effect capable of improving the efficiency and performance of re-liquefaction of boil-off gas.

A fuel gas supply system according to an embodiment of the present invention has the effect capable of efficiently utilizing and managing boil-off gas.

A fuel gas supply system according to an embodiment of the present invention has the effect capable of effectively regulating and maintaining a heating value of fuel gas.

A fuel gas supply system according to an embodiment of the present invention has the effect capable of improving energy efficiency.

A fuel gas supply system according to an embodiment of the present invention has the effect capable of efficiently operating equipment with a simple structure.

### [Brief Description of Drawings]

FIG. 1 is a conceptual diagram illustrating a fuel gas supply system according to an embodiment of the present invention
FIG. 2 is a conceptual diagram illustrating a fuel gas supply system according to another embodiment of the present invention

### [Mode for Invention]

Hereinafter, embodiments of the present invention will be described in detail with reference to the accompanying drawings. The present invention is not limited to the embodiments presented herein but may be embodied in other forms. For the sake of clarity, the drawings are not drawn to scale, and the size of the elements may be slightly exaggerated to facilitate understanding.

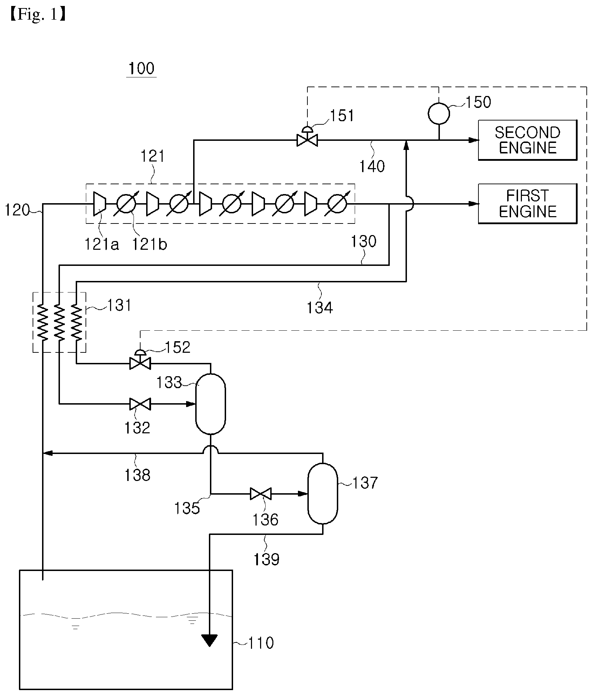

FIG. 1 is a conceptual diagram illustrating a fuel gas supply system 100 according to an embodiment of the present invention.

Referring to FIG. 1, the fuel gas supply system 100 according to an embodiment of the present invention may be provided to include a storage tank 110, a first fuel gas supply line 120 provided with a compression unit 121 pressurizing boil-off gas of the storage tank 110 and supplying boil-off gas pressurized through the compression unit 121 to an first engine, a re-liquefaction line 130 for receiving and re-liquefying a part of the pressurized boil-off gas, a second fuel gas supply line 140 for supplying boil-off gas partially pressurized by the compression unit 121 to a second engine, and a heating value regulator for measuring and regulating a heating value of fuel gas supplied to the second engine.

In the following embodiments, liquefied natural gas and boil-off gas generated from the liquefied natural gas are applied as an example to help understand the present invention, but the present invention is not limited thereto, and it should be understood that the same technical idea may be applied to various liquefied gases, such as liquefied ethane gas, liquefied hydrocarbon gas, and the like, and boil-off gases resulting therefrom.

The storage tank 110 is provided to contain or store liquefied natural gas and boil-off gas generated therefrom. The storage tank 110 may be provided as a membrane-type cargo hold that is insulation-treated to minimize the vaporization of liquefied natural gas due to external heat penetration. The storage tank 110 may be provided to stably store liquefied natural gas and boil-off gas until receiving or storing the liquefied natural gas from a production site of natural gas or the like and unloading the liquefied natural gas at the destination, and to use the liquefied natural gas and boil-off gas as fuel gas for an engine for the propulsion of a ship or an engine for power generation of a ship or the like as will be described later.

The storage tank 110 is generally installed in an insulation-treated state, but since it is practically difficult to completely block external heat penetration, boil-off gas generated by naturally vaporizing the liquefied natural gas is present inside the storage tank 110. Since such boil-off gas raises the internal pressure of the storage tank 110, thereby potentially causing hazards such as deformation and explosion of the storage tank 110, it is necessary to remove or treat the boil-off gas from the storage tank 110. Accordingly, the boil-off gas generated inside the storage tank 110 may be used as fuel gas for an engine by the first fuel gas supply line 120 or the second fuel gas supply line 140, or may be re-liquefied by the re-liquefaction line 130 to be re-supplied to the storage tank 110 as in the embodiments of the present invention. Alternatively, although not shown in the figure, the boil-off gas may be supplied to a vent mast (not shown) provided at an upper portion of the storage tank 110 to be treated or consumed.

The engine may be supplied with fuel gas such as liquefied natural gas and boil-off gas or the like contained in the storage tank 110 and may generate a propulsive force of a ship or power for generating electricity for internal equipment of the ship. The engine is composed of the first engine that is supplied with a relatively high-pressure fuel gas and generates an output, and the second engine that is supplied with a relatively low-pressure fuel gas and generates an output. For example, the first engine may be composed of an ME-GI engine or an X-DF engine capable of generating an output with a relatively high-pressure fuel gas, and the second engine may be composed of a DFDE engine and the like capable of generating an output with a relatively low-pressure fuel gas. However, it should be understood that the present invention is not limited thereto, and various numbers of engines and various kinds of engines may be used.

The first fuel gas supply line 120 is provided to pressurize boil-off gas present in the storage tank 110 and supply it to the first engine and the re-liquefaction line 130. An inlet side end of the first fuel gas supply line 120 may be provided to be connected to the inside of the storage tank 110 and an outlet side end thereof may be provided to be connected to the first engine through the first fuel gas supply line 120. The compression unit 121 having a plurality of stages of compressors 121a may be provided on the first fuel gas supply line 120 so that boil-off gas is treated in accordance with the conditions required by the engine, and the re-liquefaction line 130, which will be described later, may be branched from the first fuel gas supply line 120 at a rear end of the compression unit 121.

The compression unit 121 may include the compressors 121a to compress boil-off gas and coolers 121b to cool the boil-off gas heated by being compressed. As the engine is composed of a plurality of engines having different pressure conditions relative to each other, the second fuel gas supply line 140, which will be described later, is provided to be branched from an intermediate portion of the compression unit 121 to supply partially pressurized boil-off gas to the second engine.

Although FIG. 1 illustrates that the compression unit 121 is composed of the compressors 121a and coolers 121b of five stages as an example, the compression unit 121 may be composed of various numbers of the compressors 121a and the coolers 121b depending on the required pressure condition and temperature of an engine. Further, a cooling unit 131 of the re-liquefaction line 130, which will be described later, may be installed at a front end of the compression unit 121 on the first fuel gas supply line 120, but a detailed description thereof will be described later.

The re-liquefaction line 130 is provided to receive a part of boil-off gas pressurized by passing through the compression unit 121 of the first fuel gas supply line 120 and re-liquefy it.

The re-liquefaction line 130 includes the cooling unit 131 for cooling pressurized boil-off gas, a first expansion valve 132 for primarily depressurizing the pressurized boil-off gas that has passed through the cooling unit 131, a first gas-liquid separator 133 for separating boil-off gas which has passed through the first expansion valve 132 and is in a gas-liquid mixed state into gas components and liquid components, a boil-off gas circulation line 134 for supplying the gas components separated in the first gas-liquid separator 133 to the second engine. The re-liquefaction line 130 may include a second expansion valve 136 for secondly depressurizing the liquid components separated in the first gas-liquid separator 133, a second gas-liquid separator 137 for separating boil-off gas which has passed through the second expansion valve 136 and is in a gas-liquid mixed state into gas components and liquid components, a boil-off gas recovery line 138 for re-supplying the gas components separated in the second gas-liquid separator 137 to the storage tank 110 or the first fuel gas supply line 120, and a liquefied gas recovery line 139 for re-supplying the liquid components separated in the second gas-liquid separator 137 to the storage tank 110.

The cooling unit 131 is provided to cool the pressurized boil-off gas which is supplied to the re-liquefaction line 130. The cooling unit 131 may be composed of heat exchangers for heat-exchanging the pressurized boil-off gas with boil-off gas of a front end of the compression unit 121 delivered along the first fuel gas supply line 120 and gas components delivered along the boil-off gas circulation line 134 to be described later and separated in the first gas-liquid separator 133. Since the pressurized boil-off gas that has been pressurized by the compression unit 121 to raise its temperature and pressure is heat-exchanged with a low-temperature boil-off gas before passing through the compression unit 121 on the first fuel gas supply line 120 and low-temperature gas components delivered along the boil-off gas circulation line 134, the high-temperature pressurized boil-off gas supplied to the re-liquefaction line 130 can be cooled. As such, since the pressurized boil-off gas can be cooled by providing the cooling unit 131 as a heat exchanger without any additional cooling device, unnecessary waste of power is prevented and equipment is simplified, and thus the equipment operation efficiency is improved.

The first expansion valve 132 may be provided at a rear end of the cooling unit 131. The first expansion valve 132 primarily reduces the pressurized boil-off gas that has passed through the cooling unit 131, and thus re-liquefaction can be realized by cooling and expanding. The first expansion valve 132 may be, for example, composed of a Joule-Thomson valve. The first expansion valve 132 may depressurize the pressurized boil-off gas that has passed through the cooling unit 131 to a pressure level corresponding to a fuel gas pressure condition required by the second engine. A detailed description thereto will be described later.

The first gas-liquid separator 133 is provided to separate the boil-off gas in a gas-liquid mixed state, which has passed through the first expansion valve 132 and is primarily cooled and depressurized, into gas components and liquid components. The pressurized boil-off gas is re-liquefied by cooling and depressurizing while passing through the first expansion valve 132, but flash gas may be generated during the depressurization. Accordingly, the boil-off gas that has passed through the first expansion valve 132 and becomes a gas-liquid mixed state is received in the first gas-liquid separator 133 and is separated into gas components and liquid components, thereby ensuring the reliability of the re-liquefaction process and handling the gas and liquid components separately.

Meanwhile, natural gas is a mixture containing ethane, propane, butane, nitrogen and the like in addition to methane that is a main component. Among them, the boiling point of nitrogen is about -195.8 degrees Celsius, which is much lower than that of methane (boiling point: -161.5 degrees Celsius) and ethane (boiling point: -89 degrees Celsius) and the like. Accordingly, there is a problem that as the nitrogen component has a very low boiling point, the boil-off gas generated by spontaneously vaporizing in the storage tank 110 contains a large amount of nitrogen component by relatively vaporizing the nitrogen component first, and thus as the concentration of the nitrogen component of the boil-off gas increases, the re-liquefaction efficiency of boil-off gas decreases.

In particular, after boil-off gas is pressurized by the compression unit 121 and the pressurized boil-off gas is cooled by the cooling unit 131 for re-liquefaction of the boil-off gas, at the time of depressurizing the pressurized boil-off gas by the first expansion valve 132, the nitrogen component having a low boiling point is contained at a high concentration in gas components such as a flash gas separated in the first gas-liquid separator 133. When the gas components containing a high concentration of the nitrogen component are circulated again in the fuel gas supply system 100, not only the re-liquefaction efficiency of the boil-off gas is lowered, but also a load on the compressors 121a or the like of the compression unit 121 is caused due to the circulating gas components or it is required to install the compressors 121a of a high-quality, resulting in inefficiency of the equipment operation.

The boil-off gas circulation line 134 is provided to supply the gas components to the second engine as fuel gas, which are separated in the first gas-liquid separator 133 and contain a relatively high concentration of nitrogen component. As described above, the nitrogen component that is relatively high in concentration is contained in the gas components generated in the process of depressurizing the boil-off gas cooled and pressurized through the first expansion valve 132. The boil-off gas circulation line 134 is supplied with gas components having a low re-liquefaction efficiency among the entirety of gas components and supplies and utilizes the gas components to the second engine as fuel gas to thereby efficiently utilize the fuel gas, and at the same time to thereby increase the re-liquefaction efficiency of the liquid components which are separated by the first gas-liquid separator 133 and contain a relatively low concentration of nitrogen component.

The first expansion valve 132 is provided to depressurize the pressurized boil-off gas that has passed through the cooling unit 131 to a pressure level corresponding to a fuel gas pressure condition required by the second engine. Accordingly, the boil-off gas circulation line 134 can directly supply gas components separated in the first gas-liquid separator 133 to the second engine as fuel gas without a separate compression device.

The boil-off gas circulation line 134 is provided to pass through the cooling unit 131 composed of heat exchangers. The cooling of the pressurized boil-off gas flowing along the re-liquefaction line 130 is performed by using the cold heat of the gas components containing a high-concentration nitrogen component flowing along the boil-off gas circulation line 134, and at the same time the temperature of the gas components flowing along the boil-off gas circulation line 134 can be raised to a level corresponding to the temperature condition of a fuel gas required by the second engine by receiving a high temperature heat of the pressurized boil-off gas flowing along the re-liquefaction line 130.

The boil-off gas circulation line 134 is provided with a flow rate regulation valve 152 of a heating value regulator, which will be described later, so that the supply amount of a fuel gas transferred along the boil-off gas circulation line 134 can be regulated. A detailed description thereto will be described later.

The liquid components containing the relatively low concentration nitrogen component separated by the first gas-liquid separator 133 may be conveyed along the liquefied gas circulation line 135, and may be secondarily depressurized and re-liquefied by the second expansion valve 136 provided at the liquefied gas circulation line 135. As described above, the re-liquefaction efficiency of boil-off gas is improved as the nitrogen component of a low concentration is contained. Accordingly, since the liquid components separated by the first gas-liquid separator 133 contains the nitrogen component of a low concentration, even though depressurization is performed by the second expansion valve 136, the generation of gas components such as flash gas is reduced, and the re-liquefaction efficiency is improved. The second expansion valve 136 may be, for example, composed of a Joule-Thomson valve, and may depressurize to a pressure level corresponding to the internal pressure of the storage tank 110.

The second gas-liquid separator 137 is provided to separate boil-off gas which has been secondly cooled and depressurized by passing through the second expansion valve 136 and is in a gas-liquid mixed state into gas components and liquid components. The liquid components of the first gas-liquid separator 133, which are additionally depressurized by the second expansion valve 136, contain a low concentration of nitrogen component so that most liquid components are re-liquefied. However, not only a small amount of nitrogen component is present, but it is also practically impossible to achieve complete re-liquefaction. Accordingly, the boil-off gas that has passed through the second expansion valve 136 and becomes a gas-liquid mixed state is separated into gas components and liquid components in the second gas-liquid separator 137, so that the reliability of a re-liquefaction process can be ensured and each component can be handled separately.

The boil-off gas recovery line 138 may be provided between the second gas-liquid separator 137 and the storage tank 110 or between the second gas-liquid separator 137 and the first fuel gas supply line 120 so as to re-supply the gas components separated by the second gas-liquid separator 137 to the storage tank 110 or the first fuel gas supply line 120. Although FIG. 1 illustrates that the boil-off gas recovery line 138 is provided to re-supply the gas components of the second gas-liquid separator 137 to a front end of the compression unit 121 on the first fuel gas supply line 120, the boil-off gas recovery line 138 may be provided to re-supply the gas components of the second gas-liquid separator 137 to the storage tank 110 or to both the first fuel gas supply line 120 and the storage tank 110.

The liquefied gas recovery line 139 may be provided between the second gas-liquid separator 137 and the storage tank 110 so as to re-supply the liquid components separated by the second gas-liquid separator 137 to the storage tank 110. The liquefied gas recovery line 139 may be provided such that an inlet side end thereof communicates with a lower side of the second gas-liquid separator 137 and an outlet side end thereof communicates with the inside of the storage tank 110. The liquefied gas recovery line 139 may be provided with an on-off valve (not shown) to regulate the supply amount of the re-liquefied liquefied natural gas recovered to the storage tank 110.

The second fuel gas supply line 140 is provided to be branched from an intermediate portion of the compression unit 121 on the first fuel gas supply line 120 so that partially pressurized boil-off gas is supplied to the second engine. The second fuel gas supply line 140 may be provided such that an inlet side end thereof is connected to the intermediate portion of the compression unit 121 and an outlet side end thereof joins the boil-off gas circulation line 134 and is connected to the second engine.

The second engine receives a relatively low-pressure fuel gas and generates an output. Therefore, the second engine may be operated by receiving a partially pressurized boil-off gas as fuel gas from the second fuel gas supply line 140 branched from the intermediate portion of the compression unit 121 that compresses boil-off gas. The second engine may also receive, as fuel gas, the gas components containing the high concentration of nitrogen component conveyed along the boil-off gas circulation line 134 described above. Meanwhile, although not shown in FIG. 1, in a case where the supply amount of fuel gas supplied through the second fuel gas supply line 140 and the boil-off gas circulation line 134 is larger than the supply amount of fuel gas required by the second engine, a GCU (Gas Combustion Unit) for receiving and consuming surplus fuel gas may be provided and an outlet side end of the second fuel gas supply line 140 may be branched and connected to the GCU.

The heating value regulator is provided to measure and regulate a heating value of fuel gas supplied to the second engine.

The heating value means the amount of heat released when a fuel gas of a unit mass is completely burned. Among natural gases, methane, butane and propane have a relatively high heating value and thus increase the heating value of the fuel gas (heating value of methane: about 12,000 kcal/kg, heating value of butane: about 11,863 kcal/kg, and heating value of propane: about 2,000 Kcal/kg), whereas the heating value of nitrogen is very low (heating value of nitrogen: about 60 kcal/kg), and thus the higher the absolute content or concentration of the nitrogen component, the lower the total heating value of the fuel gas. Herein, if the total heating value of fuel gas supplied to an engine is too low to satisfy the minimum heating value required by the engine, it affects the output of the engine and causes an unnecessary load to be generated in the engine.

As described above, in order to increase the re-liquefaction efficiency of the re-liquefaction line 130, the liquid components separated in the first gas-liquid separator 133 and containing the nitrogen component of a relatively low concentration are supplied to the second expansion valve 136, and the gas components containing the nitrogen of a relatively high concentration are supplied to the second engine through the boil-off gas circulation line 134. Accordingly, there is a concern that due to the nitrogen of a high concentration flowing along the boil-off gas circulation 134, the heating value of fuel gas supplied to the second engine may be lower than the a conditional heating value required by the second engine.

Referring to FIG. 1, the heating value regulator of the fuel gas supply system 100 according to an embodiment of the present invention includes a heating value measuring device 150 for measuring or calculating a heating value of fuel gas supplied to the second engine, and flow rate regulation valves 151 and 152 installed at the second fuel gas supply line 140 and the boil-off gas circulation line 134, respectively.

The heating value measuring device 150 may measure in real time the heating value of the fuel gas including the partially pressurized boil-off gas supplied to the second engine through the second fuel gas supply line 140 and the gas components of the first gas-liquid separator 133 supplied to the second engine through the boil-off gas circulation line 134. The heating value measuring device 150 may transmit heating value information of the measured fuel gas to a display unit (not shown) including a display and the like to notify an occupant of a ship or may transmit heating value information of the measured fuel gas to a controller (not shown), and the controller may control the degree of opening and closing of the flow rate regulation valves, which will be described later, by comparing and analyzing a conditional heating value of the second engine which is inputted in advance and the heating value information of fuel gas transmitted from the heating value measuring device 150.

FIG. 1 illustrates that the heating value measuring device 150 is provided on the second fuel gas supply line 140 at a rear of the point where it joins the boil-off gas circulation line 134 to measure the heating value of fuel gas, but as long as it is possible to measure the heating value of fuel gas supplied to the second engine, the position may be changed variously.

The flow rate regulation valves 151 and 152 are installed at the second fuel gas supply line 140 and the boil-off gas circulation line 134, respectively. The opening and closing degree of the respective flow rate regulation valves 151 and 152 may be regulated manually by an operator or automatically by the controller based on heating value information of fuel gas measured by the heating value measuring device 150 and conditional heating value information of the second engine, thereby

regulating the heating value of the fuel gas.

As an example, when the heating value of fuel gas measured by the heating value measuring device 150 is smaller than the condition heating value of the second engine, the flow rate regulation valve 151 provided at the second fuel gas supply line 140 may be opened, and the flow regulation valve 152 provided at the boil-off gas circulation line 134 may be completely closed or partially closed, thereby increasing the heating value of fuel gas. On the contrary, when the heating value of fuel gas measured by the heating value measuring device 150 is larger than the condition heating value of the second engine, in order to preferentially consume the nitrogen component of the boil-off gas in the fuel gas supply system 100, the flow rate regulation valve 152 provided at the boil-off gas circulation line 134 may be opened, and the flow rate regulation valve 151 provided at the second fuel gas supply line 140 may be completely closed or partially closed.

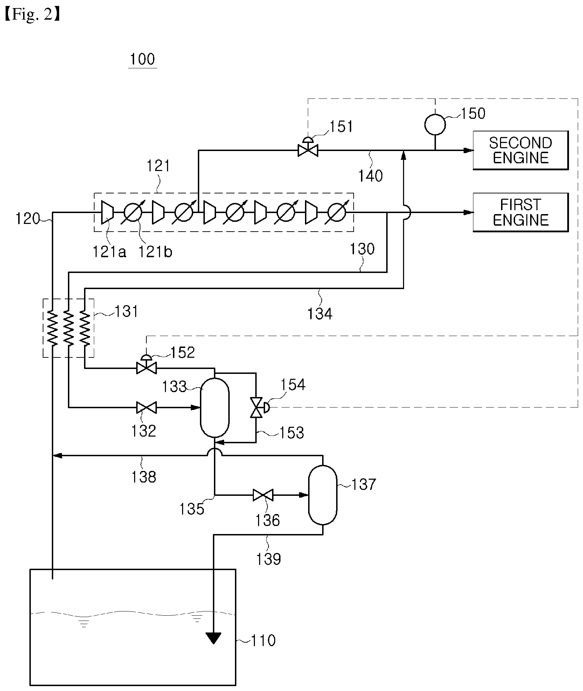

FIG. 2 is a conceptual diagram illustrating the fuel gas supply system 100 according to another embodiment of the present invention. Referring to FIG. 2, a heating value regulator of the fuel gas supply system 100 according to another embodiment of the present invention may include the heating value measuring device 150 for measuring or calculating a heating value of fuel gas supplied to the second engine, a heating value regulation line 153 for recovering the gas components supplied along the boil-off gas circulation line 134 to the liquefied gas circulation line 135, and the flow rate regulation valves 151, 152 and a flow rate regulation valve 154 installed at the second fuel gas supply line 140, the boil-off gas circulation line 134 and the heating value regulation line 153, respectively.

Since the fuel gas supply system 100 according to another embodiment of the present invention described below is the same as the above-described embodiment except for the structure which is additionally described with a separate reference numeral, the description of the same contents will be omitted in order to prevent duplication.

The heating value regulation line 153 may be provided such that an inlet side end thereof is connected to the boil-off gas circulation line 134 and an outlet side end thereof is connected to a front end of the second expansion valve 136 on the liquefied gas circulation line 135. As described above, the gas components flowing along the boil-off gas circulation line 134 contain the nitrogen component of a high concentration, and thus the heating value thereof is lower than that of the partially pressurized boil-off gas flowing along the second fuel gas supply line 140. Accordingly, by recovering a part of the gas components flowing along the boil-off gas circulation line 134 to the liquefied gas circulation line 135, the total heating value of the fuel gas supplied to the second engine can be raised and regulated. At the same time, by recovering a part of the gas components flowing in the boil-off gas circulation line 134 to the liquefied gas circulation line 135 by the heating value regulation line 153, the supply amount of fuel gas can be efficiently regulated corresponding to the supply amount of fuel gas required by the second engine.

The flow rate regulation valve 154 for regulating the supply amount of a part of gas components flowing along the heating value regulation line 153 may be provided at the heating value regulation line 153. The opening and closing degree of the flow rate regulation valves 154 may be regulated manually by an operator or automatically by the controller based on heating value information of fuel gas measured by the heating value measuring device 150 and conditional heating value information of the second engine, thereby controlling the supply amount of a part of gas components flowing along the heating value regulation line 153. Alternatively, although not shown in the figures, the opening and closing degree of the flow rate regulation valves 154 provided at the heating value regulation line 153 may be controlled based on supply amount information of fuel gas measured by a flow rate sensing unit (not shown) installed at the second fuel gas supply line 140 or the second engine.

The fuel gas supply system 100 according to an embodiment of the present invention having the above-described configuration has the effect that since gas components containing a relatively high concentration of a nitrogen component generated in the process of reducing the pressure of the pressurized boil-off gas for the re-liquefaction process of the boil-off gas are used as fuel gas for the second engine, and at the same time liquid components containing a relatively low concentration of the nitrogen component are supplied to the re-liquefaction process, the re-liquefaction efficiency of the boil-off gas and the re-liquefaction performance of the re-liquefaction line can be improved through efficient consumption of the nitrogen component in the fuel gas supply system 100 and continuous reduction of the total nitrogen content in the fuel gas supply system 100.

In addition, the fuel gas supply system 100 according to an embodiment of the present invention having the above-described configuration has the effect that by controlling and regulating the heating value of fuel gas by the heating value regulator, the heating value amount of the fuel gas is controlled in accordance with the heating value required by the engine, thereby efficiently utilizing and managing the fuel gas.

Although the present invention has been described with reference to the embodiments illustrated in the accompanying drawings, it will be understood by those skilled in the art that it is only illustrative, and various changes and modifications may be made without departing from the scope of the present invention. Accordingly, the true scope of the present invention should be determined only by the appended claims.

## Claims

1. A fuel gas supply system (100) comprising:
a storage tank (110) for receiving liquefied gas and boil-off gas;
a first fuel gas supply line (120) provided with a compression unit (121) pressurizing boil-off gas of the storage tank (110) and supplying boil-off gas pressurized through the compression unit (121) to a first engine;
a second fuel gas supply line (140) branched from an intermediate portion of the compression unit (121) and supplying boil-off gas partially pressurized by the compression unit (121) to a second engine; and
a re-liquefaction line (130) for receiving and re-liquefying a part of the pressurized boil-off gas,
wherein the re-liquefaction line (130) comprises a cooling unit (131) for cooling the pressurized boil-off gas, a first expansion valve (132) for primarily depressurizing the pressurized boil-off gas that has passed through the cooling unit (131), a first gas-liquid separator (133) for separating boil-off gas which has passed through the first expansion valve (132) and is in a gas-liquid mixed state into gas components and liquid components, a boil-off gas circulation line (134) for supplying the gas components separated in the first gas-liquid separator (133) to the second engine, and a liquefied gas circulation line (135) for receiving the liquid components separated in the first gas-liquid separator (133),
**characterized in that**
the fuel gas supply system (100) further comprises a heating value regulator for measuring and regulating a heating value of fuel gas supplied to the second engine, wherein the heating value regulator comprises a heating value measuring device (150) for measuring a heating value of the fuel gas supplied to the second engine, and a first flow rate regulation valve (151) provided at the second fuel gas supply line (140) and a second flow rate regulation valve (152) provided at the boil-off gas circulation line (134).

2. The fuel gas supply system (100) according to claim 1,
wherein the heating value regulator further comprises a heating value regulation line (153) for circulating the gas components of the first gas-liquid separator (133) flowing along the boil-off gas circulation line (134) to the liquefied gas circulation line (135), and a third flow rate regulation valve (154) provided at the heating value regulation line (153).

3. The fuel gas supply system (100) according to claim 2,
wherein the respective flow rate regulation valves (151, 152, 154) are controlled in accordance with fuel gas heating value information measured by the heating value measuring device (150).

4. The fuel gas supply system (100) according to claim 3,
wherein the re-liquefaction line (130) further comprises a second expansion valve (136) provided at the liquefied gas circulation line (135) for secondly depressurizing the liquid components separated in the first gas-liquid separator (133), a second gas-liquid separator (137) for separating boil-off gas that has passed through the second expansion valve (136) and is in a gas-liquid mixed state into gas components and liquid components, a boil-off gas recovery line for supplying the gas components separated in the second gas-liquid separator (137) to the storage tank (110) or an front end of the compression unit (121) on the first fuel gas supply line (120), and a liquefied gas recovery line (139) for supplying the liquid components separated in the second gas-liquid separator (137) to the storage tank (110).

5. The fuel gas supply system (100) according to claim 1,
wherein the cooling unit (131) comprises heat exchangers for heat-exchanging the pressurized boil-off gas with at least one of the boil-off gas in the front end of the compression unit (121) and the gas components separated in the first gas-liquid separator (133).

6. The fuel gas supply system (100) according to claim 1,
wherein the first expansion valve (132) depressurizes the pressurized boil-off gas to a pressure level corresponding to a fuel gas pressure condition required by the second engine or a pressure of the partially pressurized boil-off gas.

## Patentansprüche

1. Brenngasliefersystem (100), umfassend:
einen Speichertank (110) zum Aufnehmen von verflüssigtem Gas und von Abdampfgas;
eine erste Brenngaslieferleitung (120), die mit einer Kompressoreinheit (121) ausgestattet ist, die Abdampfgas des Speichertanks (110) unter Druck setzt und durch die Kompressoreinheit (121) unter Druck gesetztes Abdampfgas zu einer ersten Maschine liefert;
eine zweite Brenngaslieferleitung (140), die von einem mittleren Abschnitt der Kompressoreinheit (121) abzweigt und Abdampfgas, das von der Kompressoreinheit (121) teilweise unter Druck gesetzt wurde, zu einer zweiten Maschine liefert; und
eine Wiederverflüssigungsleitung (130) zum Aufnehmen und Wiederverflüssigen eines Teils des unter Druck stehenden Abdampfgases,
wobei die Wiederverflüssigungsleitung (130) eine Kühleinheit (131) zum Kühlen des unter Druck stehenden Abdampfgases, ein erstes Expansionsventil (132) zum ersten Druckentlasten des unter Druck stehenden Abdampfgases, das durch die Kühleinheit (131) geströmt ist, einen ersten Gas-Flüssigkeit-Abscheider (133) zum Scheiden von Abdampfgas, das durch das erste Expansionsventil (132) geströmt ist und in einem Gas-Flüssigkeit-Mischungszustand ist, in Gaskomponenten und Flüssigkeitskomponenten, eine Abdampfgaszirkulationsleitung (134) zum Liefern der Gaskomponenten, die im ersten Gas-Flüssigkeit-Abscheider (133) abgeschieden wurden, zur zweiten Maschine und eine Flüssiggaszirkulationsleitung (135) zum Aufnehmen der flüssigen Komponenten, die im ersten Gas-Flüssigkeit-Abscheider (133) abgeschieden worden sind,
**dadurch gekennzeichnet, dass**
das Brenngasliefersystem (100) ferner einen Heizwertregler zum Messen und Regeln eines Heizwerts von Brenngas, das zur zweiten Maschine geliefert wird, umfasst, wobei der Heizwertregler eine Heizwertmessvorrichtung (150) zum Messen eines Heizwerts des Brenngases, das zur zweiten Maschine geliefert wird, und ein erstes Strömungsratenregulierungsventil (151), das an der zweiten Brenngaslieferleitung (140) bereitgestellt ist, und ein zweites Strömungsratenregulierungsventil (152), das an der Abdampfgaszirkulationsleitung (134) bereitgestellt ist, umfasst.

2. Brenngasliefersystem (100) nach Anspruch 1,
wobei der Heizwertregler ferner eine Heizwertregulierungsleitung (153) zum Umwälzen der Gaskomponenten des ersten Gas-Flüssigkeit-Abscheiders (133), die entlang der Abdampfgaszirkulationsleitung (134) zur Flüssiggaszirkulationsleitung (135) strömen, und ein drittes Strömungsratenregulierungsventil (154), das an der Heizwertregulierungsleitung (153) bereitgestellt ist, umfasst.

3. Brenngasliefersystem (100) nach Anspruch 2,
wobei die jeweiligen Strömungsratenregulierungsventile (151, 152, 154) gemäß Brenngasheizwertinformationen gesteuert werden, die von der Heizwertmessvorrichtung (150) gemessen werden.

4. Brenngasliefersystem (100) nach Anspruch 3,
wobei die Wiederverflüssigungsleitung (130) ferner umfasst: ein zweites Expansionsventil (136), das an der Flüssiggaszirkulationsleitung (135) bereitgestellt ist, zum zweiten Druckentlasten der im ersten Gas-Flüssigkeit-Abscheider (133) abgeschiedenen Flüssigkeitskomponenten, einen zweiten Gas-Flüssigkeit-Abscheider (137) zum Scheiden von Abdampfgas, das durch das zweite Expansionsventil (136) geströmt ist und in einem Gas-Flüssigkeit-Mischzustand ist, in Gaskomponenten und Flüssigkeitskomponenten, eine Abdampfgasrückgewinnungsleitung zum Liefern der im zweiten Gas-Flüssigkeit-Abscheider (137) abgeschiedenen Gaskomponenten in den Speichertank (110) oder ein vorderes Ende der Kompressoreinheit (121) an der ersten Brenngaslieferleitung (120) und eine Flüssiggasrückgewinnungsleitung (139) zum Liefern der Flüssigkeitskomponenten, die im zweiten Gas-Flüssigkeit-Abscheider (137) abgeschieden wurden, zum Speichertank (110).

5. Brenngasliefersystem (100) nach Anspruch 1,
wobei die Kühleinheit (131) Wärmetauscher für einen Austausch von Wärme zwischen dem unter Druck stehenden Abdampfgas und dem Abdampfgas im vorderen Ende der Kompressoreinheit (121) und/oder den Gaskomponenten, die im ersten Gas-Flüssigkeit-Abscheider (133) abgeschieden worden sind, umfasst.

6. Brenngasliefersystem (100) nach Anspruch 1,
wobei das erste Expansionsventil (132) das unter Druck stehende Abdampfgas auf einen Druckpegel, der einer Brenngasdruckbedingung, die von der zweiten Maschine benötigt wird, oder einem Druck des zum Teil unter Druck stehenden Abdampfgases entspricht, entlastet.

## Revendications

1. Système d'alimentation en combustible gazeux (100) comprenant :
un réservoir de stockage (110) pour recevoir du gaz liquéfié et du gaz d'évaporation ;
une première ligne d'alimentation en combustible gazeux (120) qui est munie d'une unité de compression (121) qui met sous pression le gaz d'évaporation du réservoir de stockage (110) et qui alimente le gaz d'évaporation qui est mis sous pression par l'intermédiaire et au travers de l'unité de compression (121) jusqu'à un premier moteur ;
une seconde ligne d'alimentation en combustible gazeux (140) qui est dérivée à partir d'une section intermédiaire de l'unité de compression (121) et qui alimente le gaz d'évaporation qui est partiellement mis sous pression par l'unité de compression (121) jusqu'à un second moteur ; et
une ligne de liquéfaction à nouveau (130) pour recevoir et liquéfier à nouveau une partie du gaz d'évaporation mis sous pression,
dans lequel la ligne de liquéfaction à nouveau (130) comprend une unité de refroidissement (131) pour refroidir le gaz d'évaporation mis sous pression, une première vanne de détente (132) pour dépressuriser de façon essentielle le gaz d'évaporation mis sous pression qui est passé au travers de l'unité de refroidissement (131), un premier séparateur gaz - liquide (133) pour séparer le gaz d'évaporation qui est passé au travers de la première vanne de détente (132) et qui est dans un état mixte ou mélangé gaz - liquide selon des composants gazeux et des composants liquides, une ligne de circulation de gaz d'évaporation (134) pour alimenter les composants gazeux qui sont séparés dans le premier séparateur gaz - liquide (133) jusqu'au second moteur et une ligne de circulation de gaz liquéfié (135) pour recevoir les composants liquides qui sont séparés dans le premier séparateur gaz - liquide (133),
**caractérisé en ce que** :
le système d'alimentation en combustible gazeux (100) comprend en outre un régulateur de valeur de chauffage pour mesurer et réguler une valeur de chauffage du combustible gazeux qui est alimenté jusqu'au second moteur, dans lequel le régulateur de valeur de chauffage comprend un dispositif de mesure de valeur de chauffage (150) pour mesurer une valeur de chauffage du combustible gazeux qui est alimenté jusqu'au second moteur, et une première vanne de régulation de débit d'écoulement (151) qui est prévue au niveau de la seconde ligne d'alimentation en combustible gazeux (140) et une deuxième vanne de régulation de débit d'écoulement (152) qui est prévue au niveau de la ligne de circulation de gaz d'évaporation (134).

2. Système d'alimentation en combustible gazeux (100) selon la revendication 1,
dans lequel le régulateur de valeur de chauffage comprend en outre une ligne de régulation de valeur de chauffage (153) pour faire circuler les composants gazeux du premier séparateur gaz - liquide (133) qui s'écoulent le long de la ligne de circulation de gaz d'évaporation (134) jusqu'à la ligne de circulation de gaz liquéfié (135) et une troisième vanne de régulation de débit d'écoulement (154) qui est prévue au niveau de la ligne de régulation de valeur de chauffage (153).

3. Système d'alimentation en combustible gazeux (100) selon la revendication 2,
dans lequel les vannes de régulation de débit d'écoulement respectives (151, 152, 154) sont commandées en fonction d'une information de valeur de chauffage de combustible gazeux qui est mesurée par le dispositif de mesure de valeur de chauffage (150).

4. Système d'alimentation en combustible gazeux (100) selon la revendication 3,
dans lequel la ligne de liquéfaction à nouveau (130) comprend en outre une seconde vanne de détente (136) qui est prévue au niveau de la ligne de circulation de gaz liquéfié (135) pour dépressuriser de façon secondaire les composants liquides qui sont séparés dans le premier séparateur gaz - liquide (133), un second séparateur gaz - liquide (137) pour séparer le gaz d'évaporation qui est passé au travers de la seconde vanne de détente (136) et qui est dans un état mixte ou mélangé gaz - liquide selon des composants gazeux et des composants liquides, une ligne de récupération de gaz d'évaporation pour alimenter les composants gazeux qui sont séparés dans le second séparateur gaz - liquide (137) jusqu'au réservoir de stockage (110) ou jusqu'à une extrémité avant de l'unité de compression (121) sur la première ligne d'alimentation en combustible gazeux (120) et une ligne de récupération de gaz liquéfié (139) pour alimenter les composants liquides qui sont séparés dans le second séparateur gaz - liquide (137) jusqu'au réservoir de stockage (110).

5. Système d'alimentation en combustible gazeux (100) selon la revendication 1,
dans lequel l'unité de refroidissement (131) comprend des échangeurs thermiques pour soumettre à échange thermique le gaz d'évaporation mis sous pression et au moins un ensemble gazeux pris parmi le gaz d'évaporation dans l'extrémité avant de l'unité de compression (121) et les composants gazeux qui sont séparés dans le premier séparateur gaz - liquide (133).

6. Système d'alimentation en combustible gazeux (100) selon la revendication 1,
dans lequel la première vanne de détente (132) dépressurise le gaz d'évaporation mis sous pression jusqu'à un niveau de pression qui correspond à une condition de pression de combustible gazeux qui est requise par le second moteur ou à une pression du gaz d'évaporation partiellement mis sous pression.
